(19) Europäisches Patentamt
European Patent Office
Office européen des brevets

(11) **EP 4 364 888 A1**

(12) **EUROPEAN PATENT APPLICATION**
published in accordance with Art. 153(4) EPC

(43) Date of publication:
**08.05.2024 Bulletin 2024/19**

(21) Application number: **21950094.9**

(22) Date of filing: **13.07.2021**

(51) International Patent Classification (IPC):
**B23Q 15/00** (2006.01)

(52) Cooperative Patent Classification (CPC):
**B23Q 15/00**

(86) International application number:
**PCT/JP2021/026274**

(87) International publication number:
**WO 2023/286151 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: DMG Mori Co., Ltd.
**Yamatokoriyama-shi, Nara 639-1160 (JP)**

(72) Inventors:
• **SHIMODA, Naofumi**
**Yamatokoriyama-shi, Nara 639-1160 (JP)**
• **SAWADA, Tomohiro**
**Yamatokoriyama-shi, Nara 639-1160 (JP)**
• **SAINO, Atsushi**
**Yamatokoriyama-shi, Nara 639-1160 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **MACHINING TIME ESTIMATION METHOD, MACHINING TIME ESTIMATION DEVICE, COMPUTER PROGRAM, AND RECORDING MEDIUM**

(57)  A machining time estimation device includes a motor information input unit (3) inputting a rated power of a first spindle motor of a first NC machine tool and a rated power of a second spindle motor of a second NC machine tool, a machining time input unit (4) inputting a first machining time for machining of a workpiece by the first NC machine tool using an NC program, a high-load machining ratio input unit (5) inputting a high-load machining ratio as a ratio of machining performed at a predetermined high loading in the first machining time, and a machining time estimation unit (6). The machining time estimation unit (6) estimates a second machining time for machining of the workpiece by the second NC machine tool under a condition making a high loading with respect to the rated power of the second spindle motor equal to the high loading in the first NC machine tool, based on the rated powers of the first and second spindle motors, the first machining time, and the high-load machining ratio.

*FIG.1*

## Description

Technical Field

0001 The present invention relates to a machining time estimation method, a machining time estimation device, and so on for estimating a workpiece machining time in an NC machine tool.

Background Art

0002 Japanese Unexamined Patent Application Publication No. 2003-175439 (Patent Literature 1 listed below) discloses a conventionally known device for estimating a workpiece machining time in an NC machine tool.

0003 This machining time estimation device estimates a machining time for machining using an NC program in an NC machine tool including a program storage, a program analysis unit, and a drive control unit. The program storage stores the NC program that is constituted by a plurality of command blocks. The program analysis unit reads out the NC program stored in the program storage and analyzes the NC program block by block, and outputs control signals based on the analysis results. The drive control unit receives the control signals output from the program analysis unit and controls operation of drive mechanism units for axial movement and auxiliary function of the NC machine tool in accordance with the received control signals.

0004 Specifically, the machining time estimation device includes a database, actual operating time calculating means, and operating time estimating means. The database stores accumulated actual operating time data of the drive mechanism unit for auxiliary function. The actual operating time calculating means at least calculates an actual operating time of the drive mechanism unit for auxiliary function based on the control signals output from the program analysis unit and an operation complete signal obtained from the drive mechanism unit and updates the data stored in the database with data on the calculated actual operating time. The operating time estimating means analyzes the NC program stored in the program storage block by block. The operating time estimating means calculates an estimated operating time of the drive mechanism unit for axial movement based on the analysis results, and estimates an operating time of the drive mechanism unit for auxiliary function by searching the database based on the analysis results. Based on the calculated estimated operating time of the drive mechanism unit for axial movement and the estimated operating time of the drive mechanism unit for auxiliary function, the operating time estimating means calculates an estimated operating time for each block and then integrates the calculated estimated operating times, thereby calculating an estimated machining time.

0005 In this machining time estimation device, the actual operating time calculating means at least calculates the actual operating time of the drive mechanism unit for auxiliary function and updates the data stored in the database with data on the calculated actual operating time each time actual machining is performed in the machine tool. By this updating process, the reliability of the data stored in the database is increased.

0006 The operating time estimating means executes the machining time estimation using the database with the thus-increased reliability. That is to say, the operating time estimating means analyzes each block of the NC program stored in the program storage. When an axial movement is commanded, the operating time estimating means acquires an axial movement amount based on the axial movement command and calculates an estimated operating time for the axial movement based on the acquired axial movement amount and the commanded axial feed speed. When an auxiliary function operation is commanded, the operating time estimating means searches the database based on the auxiliary function operation command and obtains the corresponding auxiliary function operation time.

0007 Where either an axial movement command or an auxiliary function operation command is command in one block, the time obtained by the above-described process for the command is designated as an estimated operating time for the block. On the other hand, where both an axial movement command and an auxiliary function operation command are commanded in one block and the axial movement and the auxiliary function operation are performed in sequence, the times obtained by the above-described processes are added up and the added-up value is designated as an estimated operating time for the block. Where the axial movement and the auxiliary function operation are performed in parallel, the longer one of the times obtained by the above-described processes is designated as an estimated operating time for the block. An estimated operating time is calculated for each block in this manner and then the calculated operating times are integrated. Thereby, an estimated machining time is calculated.

0008 Thus, with this machining time estimation device, even if the actual operating time for auxiliary function changes with time or changes depending on the condition of the machine tool, the database that reflects the actual condition of the machine tool is used for the machining time calculation. Therefore, a highly accurate machining time corresponding to the actual condition of the machine tool is calculated.

Citation List

Patent Literature

0009 Patent Literature 1: Japanese Unexamined Patent Application Publication No. 2003-175439

Summary of Invention

Technical Problem

0010 Among the machining conditions in an NC machine tool, the cutting speed is subject to some restrictions due to multiple elements such as the workpiece material, the tool wear, and the tool toughness. Further, the limits of the feed rate and depth of cut of the tool are determined based on the rated power of a spindle motor mounted in the NC machine tool, i.e., the performance of the spindle motor, and the performance of the tool.

0011 Therefore, even when the same workpiece is machined, the machining conditions differ according to the performance of the spindle motor mounted in the NC machine tool and the tool to be used. Further, an NC program created under the machining conditions also differs. Accordingly, the machining time for machining of a workpiece differs according to the performance of the spindle motor mounted in the NC machine tool and the tool to be used.

0012 Likewise in other fields, improvements are constantly made in the field of machine tools and machine tools with improved performance are launched on a daily basis. On the other hand, machine tool users make day-to-day studies so as to reduce the cost for machining a workpiece. An approach therefor is to modernize a facility for machining a workpiece, that is to say, a machine tool, to achieve automation of the machining, reduction of the machining time, etc.

0013 In particular, introducing a leading-edge machine tool in place of the existing machine tool can improve the machine tool operating rate and improve the machine tool performance (particularly, the spindle motor rated power), so that the machining cost is reduced accordingly. Therefore, when considering introducing a new machine tool, the user focuses on the machining time as an index for reducing the machining cost. The user considers how much the machining time is shortened in machining the same workpiece with a leading-edge machine tool to be introduced in place of the existing machine tool. In this consideration of the machining time, application of the above-described conventional machining time estimation device is expected.

0014 However, in order to use the above-described conventional machining time estimation device to estimate an expected machining time (shortened machining time) for machining using the machine tool to be introduced, there is a problem that it is necessary to newly create an NC program that is improved according to the performance of the machine tool to be introduced. In order to newly create such an NC program, it is necessary to accurately analyze the existing NC program. This operation is burdensome. In addition, the machining conditions determined according to the performance of the machine tool diversify. Therefore, it is not easy to newly create such an NC program.

0015 Accordingly, if it is possible to quickly estimate a machining time shortened by using a new machine tool, users can quickly judge the benefit of introducing a new machine tool. On the other hand, it is preferable also for machine tool manufacturers since they can quickly proceed with business negotiations if they can provide such a benefit to users.

0016 The present invention has been achieved in view of the above-described circumstances, and an object of the invention is to provide a machining time estimation method, a machining time estimation device, and so on that enable a machining time shortened according to the performance of a new machine tool to be estimated for machining of the same workpiece by the new machine tool.

Solution to Problem

0017 To solve the above-described problem, the present invention provides a machining time estimation method including:

acquiring a first machining time as a machining time for machining of a predetermined workpiece by a first NC machine tool using an NC program created for the machining of the workpiece and acquiring a high-load machining ratio as a ratio of a high-load machining time performed at a predetermined or more high loading with respect to a rated power of a first spindle motor mounted in the first NC machine tool in the first machining time; and
estimating a second machining time as a machining time for machining of the workpiece by a second NC machine tool using the NC program modified to a condition making a high loading with respect to a rated power of a second spindle motor mounted in the second NC machine tool equal to the high loading in the first NC machine tool, based on the acquired first machining time and high-load machining ratio, the rated power of the first spindle motor, and the rated power of the second spindle motor.

0018 The present invention also provides a machining time estimation device capable of suitably implementing the machining time estimation method, including:

a motor information input unit that inputs a rated power of a first spindle motor mounted in a first NC machine tool and a rated power of a second spindle motor mounted in a second NC machine tool;
a machining time input unit that inputs a first machining time as a machining time for machining of a predetermined workpiece by the first NC machine tool using an NC program created for the machining of the workpiece;
a high-load machining ratio input unit that inputs a high-load machining ratio as a ratio of a high-load machining time performed at a predetermined or more high loading with respect to the rated power of the first spindle motor in the first machining time;

a machining time estimation unit that estimates a second machining time as a machining time for machining of the workpiece by the second NC machine tool using the NC program modified to a condition making a high loading with respect to the rated power of the second spindle motor equal to the high loading in the first NC machine tool, based on the rated powers of the first and second spindle motors input from the motor information input unit, the first machining time input from the machining time input unit, and the high-load machining ratio input from the high-load machining ratio input unit.

0019 In the machining time estimation device and machining time estimation method according to the present invention, a rated power of a first spindle motor mounted in a first NC machine tool and a rated power of a second spindle motor mounted in a second NC machine tool are input from the motor information input unit and thereby acquired. Further, a first machining time for machining of a predetermined workpiece by the first NC machine tool using an NC program created for the machining of the workpiece is input from the machining time input unit and thereby acquired. Furthermore, a high-load machining ratio as a ratio of a high-load machining time performed at a predetermined or more high loading with respect to the rated power of the first spindle motor in the first machining time is input from the high-load machining ratio input unit and thereby acquired.

0020 Based on these acquired data, a second machining time as a machining time for machining of the workpiece by the second NC machine tool using the NC program modified to a condition making a high loading with respect to the rated power of the second spindle motor equal to the high loading in the first NC machine tool is estimated by the machining time estimation unit.

0021 Thus, with the machining time estimation device and machining time estimation method according to the present invention, where the first NC machine tool is an existing facility and is to be replaced with the second NC machine tool and the same workpiece is to be machined by the second NC machine tool, the second machining time that is an expected machining time for machining performed under the condition making the high loading with respect to the rated power of the second spindle motor equal to the high loading in the first NC machine tool, i.e., the second machining time that is shortened according to the performance of the second NC machine tool, is estimated. Therefore, the user can easily recognize the effect to be provided by replacing the existing first NC machine tool with the second NC machine tool.

0022 Further, the second machining time is estimated without creating a new NC program improved according to the performance of the second NC machine tool. Therefore, the user can easily and quickly recognize the effect to be provided by replacing the existing first NC machine tool with the second NC machine tool.

0023 The machining time estimation unit may estimate the second machining time $T_2$ using the following equation:

$$T_2 = ((T_1-(T_1 \times R))+(T_1 \times R) \times (MP_1/MP_2),$$

where $T_1$ is the first machining time, R is the high-load machining ratio, $MP_1$ is the rated power of the first spindle motor, and $MP_2$ is the rated power of the second spindle motor.

0024 In the present invention, the high loading means that the output of the spindle motor is at a load of a predetermined or more ratio with respect to the rated power of the spindle motor. For example, the high loading can be defined as the output of the spindle motor being 80% or more of the rated power of the spindle motor. Alternatively, the high loading may be defined as the output of the spindle motor being 100% of the rated power of the spindle motor, so that it means limit machining. The high-load machining ratio means the ratio of a machining time with the output of the spindle motor in machining at the high loading to the entire machining time.

0025 The machining time estimation device may be configured according to the following aspect:

the machining time estimation device includes a touch panel having a function of inputting data and a function of displaying data;
the motor information input unit, the machining time input unit, and the high-load machining ratio input unit are each configured to input information via the touch panel; and
the machining time estimation unit is configured to display the estimated second machining time on the touch panel.

0026 This aspect facilitates input of the data and facilitates confirmation (recognition) of the estimated second machining time.

0027 As a matter of course, the rated power of the first spindle motor and the rated power of the second spindle motor are provided by the manufacturer of the first NC machine tool and the manufacturer of the second NC machine tool, respectively.

0028 The first machining time and the high-load machining ratio can be acquired as actual data obtained in machining the workpiece with the existing first NC machine tool. For example, where the first NC machine tool includes a monitoring system for monitoring the operating status of the first NC machine tool, the first machining time and the high-load machining ratio can be acquired from data obtained by the monitoring system. Where the first NC machine tool does not include such a monitoring system, the first machining time and the high-load machining ratio can be acquired by manually measuring the first machining time and monitoring the loading on the first spindle motor during the machining.

0029 Alternatively, the first machining time and the high-load machining ratio may be estimated by analyzing the NC program.

0030 In this case, the machining time estimation device further includes a machining status analysis unit that, using at least information on the workpiece, information on a tool, and machine information on the first NC machine tool, estimates the first machining time for the machining of the workpiece by the first NC machine tool executing the NC program created for the machining of the workpiece and executes the high-load machining ratio. The machining status analysis unit is configured to input the estimated first machining time into the machining time input unit and input the estimated high-load machining ratio into the high-load machining ratio input unit.

0031 The first machining time can be estimated from a tool path, a feed speed, and the like obtained by analyzing the NC program. The high-load machining ratio can be calculated as a ratio of the high-load machining time to the first machining time by estimating an amount of time of machining at the high loading from information on the workpiece, information on the tool, and machine information on the first NC machine tool in addition to the tool path and the feed speed.

0032 Note that the load MP [kW] on the spindle motor in machining can be calculated using the following equation:

$$MP = f \times Vc \times D \times Kc / (60 \times 10^3 \times \eta),$$

where f is a feed per revolution [mm/rev], Vc is a cutting speed [m/min], D is a machining diameter [mm], Kc is a specific cutting force [MPa], and $\eta$ is a mechanical efficiency factor.

0033 Alternatively, the machining status analysis unit may estimate the first machining time and the high-load machining ratio by a simulation method of virtually executing the NC program using at least the information on the workpiece, the information on the tool, and the machine information on the first NC machine tool.

0034 The present invention also provides a computer program for causing a computer to function as:

a motor information input unit that inputs a rated power of a first spindle motor mounted in a first NC machine tool and a rated power of a second spindle motor mounted in a second NC machine tool;
a machining time input unit that inputs a first machining time as a machining time for machining of a predetermined workpiece by the first NC machine tool using an NC program created for the machining of the workpiece;
a high-load machining ratio input unit that inputs a high-load machining ratio as a ratio of a high-load machining time performed at a predetermined or more high loading with respect to the rated power of the first spindle motor in the first machining time;
a machining time estimation unit that estimates a second machining time as a machining time for machining of the workpiece by the second NC machine tool using the NC program modified to a condition making a high loading with respect to the rated power of the second spindle motor equal to the high loading in the first NC machine tool, based on the rated powers of the first and second spindle motors input from the motor information input unit, the first machining time input from the machining time input unit, and the high-load machining ratio input from the high-load machining ratio input unit; and
a display unit that displays the second machining time estimated by the machining time estimation unit.

0035 The computer program may be configured to cause the computer to function such that the machining time estimation unit estimates the second machining time $T_2$ using the following equation:

$$T_2 = ((T_1 - (T_1 \times R)) + (T_1 \times R) \times (MP_1/MP_2),$$

where $T_1$ is the first machining time, R is the high-load machining ratio, $MP_1$ is the rated power of the first spindle motor, and $MP_2$ is the rated power of the second spindle motor.

0036 Furthermore, the present invention provides a computer-readable recording medium that has the above-described computer program recorded thereon. Advantageous Effects of Invention

0037 In accordance with the present invention, as described above, where the first NC machine tool is an existing facility and is to be replaced with the second NC machine tool and the same workpiece is to be machined by the second NC machine tool, the second machining time that is an expected machining time for machining performed under the condition making the high loading with respect to the rated power of the second spindle motor equal to the high loading in the first NC machine tool, i.e., the second machining time that is shortened according to the performance of the second NC machine tool, is estimated. Therefore, the effect to be provided by replacing the existing first NC machine tool with the second NC machine tool is recognized easily.

0038 Further, the second machining time is estimated without creating a new NC program improved according to the performance of the second NC machine tool. Therefore, the effect to be provided by replacing the existing first NC machine tool with the second NC machine tool is recognized easily and quickly.

Brief Description of Drawings

0039

FIG. 1 is a block diagram illustrating a schematic configuration of a machining time estimation device according to a first embodiment of the present invention;

FIG. 2 is an illustrative diagram illustrating a touch panel in the first embodiment;

FIG. 3 is a block diagram illustrating a schematic configuration of a machining time estimation device according to a second embodiment of the present invention;

FIG. 4 is an illustrative diagram for explaining processing in a machining status analysis unit in the second embodiment;

FIG. 5 is an illustrative diagram for explaining the processing in the machining status analysis unit in the second embodiment;

FIG. 6 is an illustrative diagram for explaining the processing in the machining status analysis unit in the second embodiment;

FIG. 7 is an illustrative diagram for explaining the processing in the machining status analysis unit in the second embodiment;

FIG. 8 is an illustrative diagram for explaining the processing in the machining status analysis unit in the second embodiment; and

FIG. 9 is an illustrative diagram for explaining the processing in the machining status analysis unit in the second embodiment.

Description of Embodiments

0040 Hereinafter, specific embodiments of the present invention will be described with reference to the drawings.
0041

1. First Embodiment

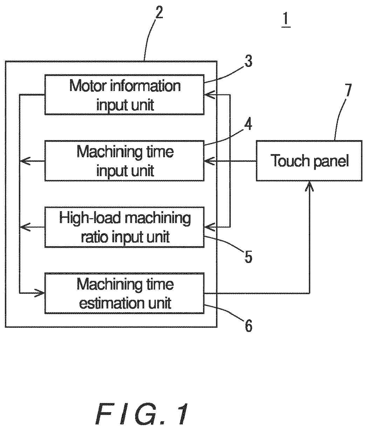

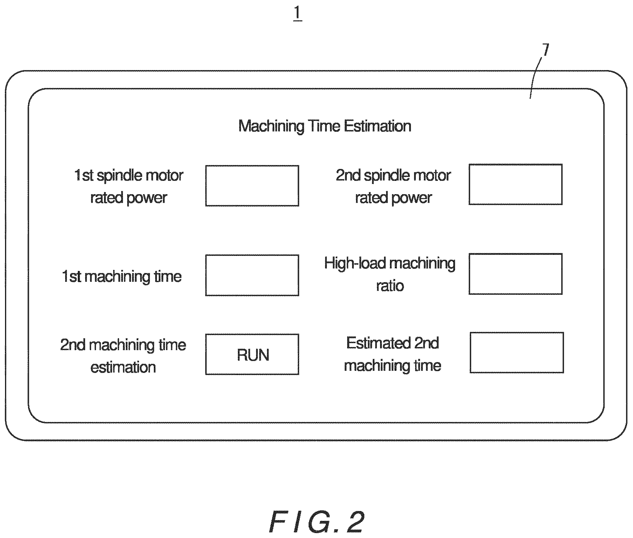

First, a machining time estimation device according to a first embodiment is described on the basis of FIGS. 1 and 2. The machining time estimation device 1 according to this embodiment uses a first machining time for machining of a predetermined workpiece by a first NC machine tool using an NC program created for the machining of the workpiece, a rated power of a first spindle motor mounted in the first NC machine tool, and other data to estimate a second machining time needed for machining of the workpiece by a second NC machine tool including a second spindle motor that has a rated power different from that of the first spindle motor. More specifically, the machining time estimation device 1 estimates the second machining time under the assumption that the NC program is modified to a condition which makes a high loading with respect to the rated power of the second spindle motor equal to a high loading in the first NC machine tool.
0042 As illustrated in FIG. 1, the machining time estimation device 1 specifically includes a computing device 2 and a touch panel 7 as an input and output device. The computing device 2 consists of a motor information input unit 3, a machining time input unit 4, a high-load machining ratio input unit 5, and a machining time estimation unit 6. Note that the computing device 2 is composed of a computer including a CPU, a RAM, and a ROM and is functionally implemented by a computer program to execute the process described later. The computing device 2 and the touch panel 7 are embodied as a tablet personal computer (tablet PC). The computer program can be stored in an appropriate computer-readable recording medium.
0043 The motor information input unit 3, the machining time input unit 4, and the high-load machining ratio input unit 5 are displayed as an input and output screen on the touch panel 7 as illustrated in FIG. 2. The motor information input unit 3 inputs into the machining time estimation unit 6 data on the rated power of the first spindle motor and data on the rated power of the second spindle motor that are input from the input and output screen. The machining time input unit 4 inputs into the machining time estimation unit 6 data on the first machining time that is input from the input and output screen. The high-load machining ratio input unit 5 inputs into the machining time estimation unit 6 data on a high-load machining ratio that is input from the input and output screen.
0044 Note that the boxes displayed on the right of the items "1st spindle motor rated power", "2nd spindle motor rated power", "1st machining time", and "High-load machining ratio" in FIG. 2 each function as an input box for inputting a numerical value therein. When a numerical value is input in each box by an operator, the input data is input into the machining time estimation unit 6 via the motor information input unit 3, the machining time input unit 4, or the high-load machining ratio input unit 5. Further, when the "RUN" key displayed on the right of the item "2nd machining time estimation" is pressed, an estimation start signal is input into the machining time estimation unit 6.
0045 The data to be input for "1 st spindle motor rated power" and the data to be input for "2nd spindle motor rated power" are provided by the manufacturer of the first NC machine tool and the manufacturer of the second NC machine tool, respectively.
0046 The high loading means that the output of the spindle motor is at a load of a predetermined or more ratio with respect to the rated power of the spindle motor. For example, the high loading can be defined as the output of the spindle motor being 80% or more of the rated power of the spindle motor. Alternatively, the high loading may be defined as the output of the spindle motor being 100% of the rated power of the spindle motor, so that it means limit machining. The high-load machining ratio means the ratio of a machining time with the output of the spindle motor in machining at the high loading to the entire machining time. On the basis of these definitions, the high-load machining ratio in the machining of the workpiece by the first NC machine tool represents a ratio of a machining time performed at the high loading with respect to the rated power of the first spindle motor in the first machining time.

0047 The first machining time and the high-load machining ratio in the first machining time can be acquired from actual data obtained in machining the workpiece with the first NC machine tool. For example, where the first NC machine tool includes a monitoring system for monitoring the operating status of the first NC machine tool, the first machining time and the machining time performed at the high loading can be acquired from data obtained by the monitoring system. Where the first NC machine tool does not include such a monitoring system, the first machining time and the high-load machining ratio can be acquired by manually measuring the first machining time and monitoring the loading on the first spindle motor during the machining.

0048 After receiving the estimation start signal input from the touch panel 7, the machining time estimation unit 6 estimates a second machining time $T_2$ for machining of the workpiece by the second NC machine tool, which is different in performance from the first NC machine tool, based on the data on the rated powers of the first and second spindle motors input from the motor information input unit 3, the data on the first machining time input from the machining time input unit 4, and the data on the high-load machining ratio input from the high-load machining ratio input unit 5. The second machining time represents a machining time needed under the assumption that the workpiece is machined by the second NC machine tool using the NC program modified to a condition making the high loading with respect to the rated power of the second spindle motor equal to the high loading in the first NC machine tool.

0049 Specifically, the machining time estimation unit 6 estimates the second machining time $T_2$ using the following equation:

$$T_2 = ((T_1 - (T_1 \times R)) + (T_1 \times R) \times (MP_1/MP_2),$$

where $T_1$ is the first machining time, R is the high-load machining ratio, $MP_1$ is the rated power of the first spindle motor, and $MP_2$ is the rated power of the second spindle motor.

0050 The high-load machining time $T_{HL1}$ in the first machining time $T_1$ is calculated by the following equation:

$$T_{HL1} = T_1 \times R.$$

0051 The high-load machining time $T_{HL2}$ under the assumption that the workpiece is machined by the second NC machine tool under a condition making the high loading with respect to the rated power of the second spindle motor equal to the high loading in the first NC machine tool is estimated (approximated) by the following equation:

$$T_{HL2} = T_{HL1}(=T_1 \times R) \times (MP_1/MP_2).$$

The high-load machining time $T_{HL2}$ represents a machining time performed at the high loading under the assumption that the workpiece is machined by the second NC machine tool using the NC program modified to a condition making the high loading with respect to the rated power of the second spindle motor equal to the high loading in the first NC machine tool. Therefore, the NC program is not changed in this estimation.

0052 On the other hand, the non-high-load machining time $T_{LL1}$ in the first machining time $T_1$ is calculated by the following equation:

$$T_{LL1} = T_1 - (T_1 \times R).$$

Accordingly, the second machining time $T_2$ is estimated (approximated) by the above-indicated equation.

0053 The machining time estimation unit 6 displays the thus-estimated second machining time $T_2$ in the box located on the right of the "Estimated 2nd machining time" displayed on the touch panel 7.

0054 With the machining time estimation device 1 according to this embodiment having the above-described configuration, data on the rated powers of the first and second spindle motors, data on the first machining time, and data on the high-load machining ratio are first input through the touch panel 7 by the operator.

0055 Once the "RUN" key on the touch panel 7 is pressed after the input of the data and thereby the estimation start signal is input, the machining time estimation unit 6 estimates the second machining time as a machining time for machining of the workpiece by the second NC machine tool using the NC program modified to a condition making the high loading with respect to the rated power of the second spindle motor equal to the high loading in the first NC machine tool. The estimated second machining time is displayed on the touch panel 7.

0056 Thus, with the machining time estimation device 1 according to this embodiment, where the first NC machine tool is an existing facility to be replaced with the second NC machine tool and the same workpiece is to be machined by the second NC machine tool, the second machining time that is an expected machining time for machining of the workpiece under the condition making the high loading with respect to the rated power of the second spindle motor equal to the high loading in the first NC machine tool, that is to say, the second machining time that is shortened according to the performance of the second NC machine tool, is estimated. Therefore, the user can easily recognize the effect to be provided by replacing the existing first NC machine tool with the second NC machine tool.

0057 Further, the second machining time is estimated without creating a new NC program improved according to the performance of the second NC machine tool. Therefore, the user can easily and quickly recognize the effect to be provided by replacing the existing first NC machine tool with the second NC machine tool.

0058 Further, the machining time estimation device 1 according to this embodiment is configured such that the data on the rated powers of the first and second spindle motors, the data on the first machining time, and the data on the high-load machining ratio are input through the touch panel 7. This configuration facilitates input of the data. Further, the estimated second machining time is displayed on the touch panel 7. This configuration facilitates confirmation (recognition) of the estimated second machining time.

0059

2. Second Embodiment

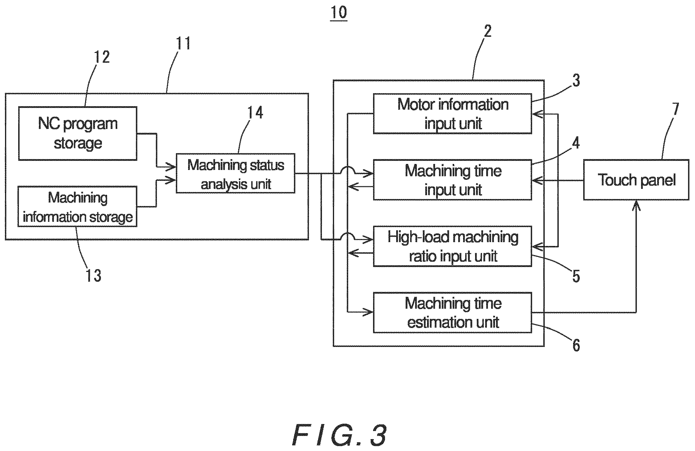

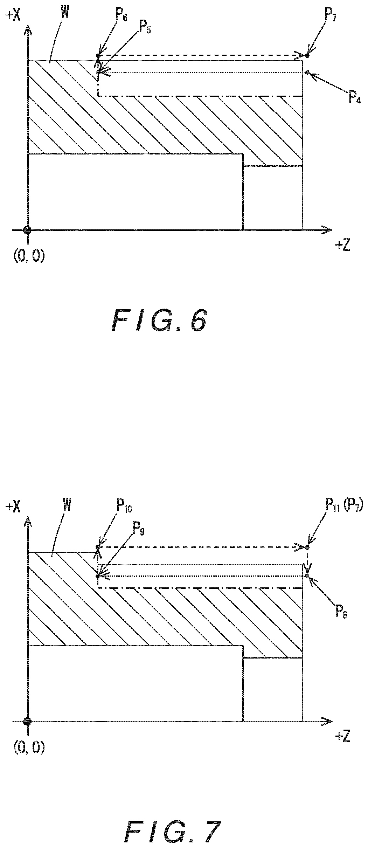

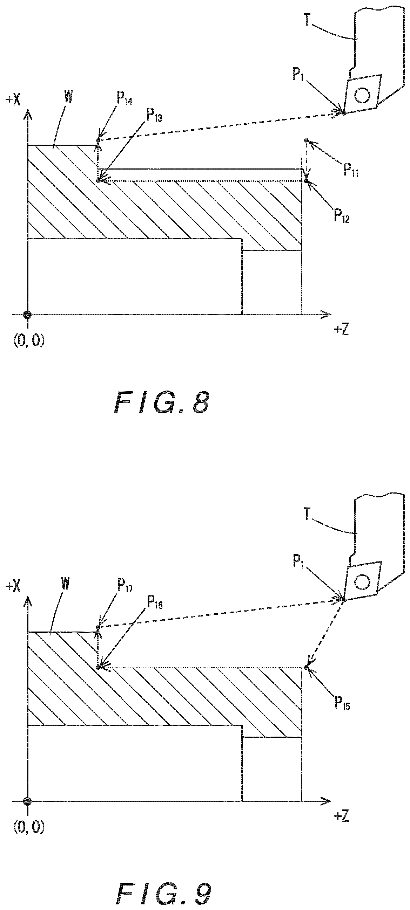

Next, a second embodiment of the present invention is described on the basis of FIGS. 3 to 9. A machining time estimation device 10 according to this embodiment includes a second computing device 11 in addition to the above-described computing device 2 and touch panel 7.

0060 As illustrated in FIG. 3, the second computing device 11 consists of an NC program storage 12, a machining information storage 13, and a machining status analysis unit 14. Note that the second computing device 11 is also composed of a computer including a CPU, a RAM, and a ROM. The machining status analysis unit 14 is functionally implemented by a computer program to execute the process described later. The NC program storage 12 and the machining information storage 13 are composed of an appropriate storage medium such as a RAM. The second computing device 11, the computing device 2, and the touch panel 7 are embodied as a tablet personal computer (tablet PC). The computer program can be stored in an appropriate computer-readable recording medium.

0061 The NC program storage 12 is a functional unit for storing an NC program to be used in an NC machine tool. In this example, the NC program storage 12 stores the NC program for machining the workpiece with the first NC machine tool.

0062 The machining information storage 13 is a functional unit that stores information such as information on the workpiece (for example, information on the workpiece dimensions and information on the workpiece material), information on the tool (for example, the specific cutting force for the workpiece material), machine information on the first NC machine tool (for example, the rated power of the first spindle motor and the mechanical efficiency factor).

0063 The machining status analysis unit 14 executes a process of analyzing the NC program stored in the NC program storage 12 and estimating the first machining time for machining of the workpiece by the first NC machine tool executing the NC program as well as the high-load machining ratio.

0064 For example, the machining status analysis unit 14 analyzes the NC program, which is constituted by a plurality of blocks written in the NC language, block by block to recognize a tool path, a spindle rotation speed, and a feed rate (feed speed) and estimates the first machining time based on the recognized data. The machining status analysis unit 14 also estimates the high-load machining ratio based on the recognized tool path, spindle rotation speed, and feed rate (feed speed) as well as the information stored in the machining information storage 13, i.e., the workpiece dimensions, the workpiece material, the specific cutting force of the tool for the workpiece material, the rated power of the first spindle motor of the first NC machine tool, and the mechanical efficiency factor. The machining status analysis unit 14 inputs the estimated first machining time into the machining time estimation unit 6 via the machining time input unit 4 and inputs the estimated high-load machining ratio into the machining time estimation unit 6 via the high-load machining ratio input unit 5.

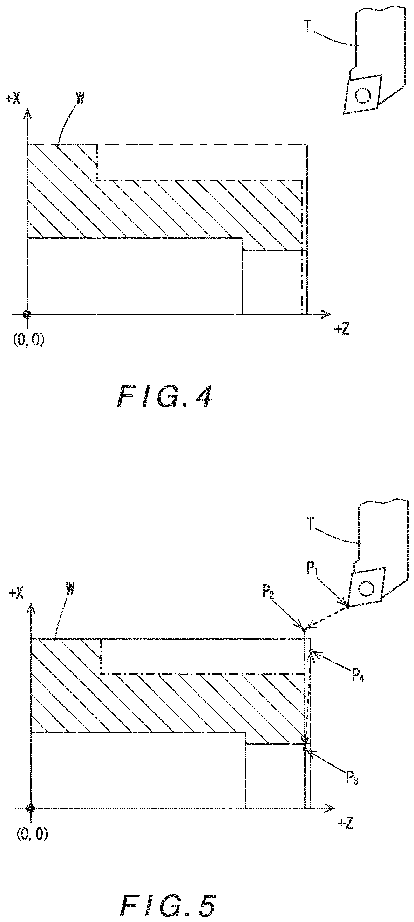

0065 For example, as illustrated in FIG. 4, the workpiece W indicated by solid lines is to be machined by the tool T into the shape indicated by dashed and dotted lines (indicated by hatching).

0066 The machining status analysis unit 14 recognizes the tool path shown in FIGS. 5 to 9 through block-by-block analysis of the NC program. The tool path recognized in this example specifically consists of paths for rough machining $P_1$->$P_2$->$P_3$->$P_4$->$P_5$->$P_6$->$P_7$->$P_8$->$P_9$->$P_{10}$->$P_{11}$->$P_{12}$->$P_{13}$->$P_{14}$->$P_1$ and paths for finishing $P_1$->$P_{15}$->$P_{16}$->$P_{17}$->$P_1$. In the figures, the broken-line arrows each indicate a rapid feed path and the dotted-line arrows each indicate a cutting feed path.

0067 The machining status analysis unit 14 estimates the moving time of the tool T in each path based on the distance and feed speed in each path and integrates the estimated moving times, thereby estimating the first machining time.

0068 Further, the machining status analysis unit 14 estimates the load MP [kW] on the first spindle motor in each cutting feed path using the following equation:

$$MP = f \times Vc \times D \times Kc/(60 \times 10^3 \times \eta),$$

where f is a feed per revolution [mm/rev], Vc is a cutting speed [m/min], D is a machining diameter [mm], Kc is a specific cutting force [MPa], and $\eta$ is a mechanical efficiency factor.

Note that the feed per revolution f [mm/rev] and the cutting speed Vc [m/min] can be acquired from the analysis of the NC program, the machining diameter D [mm] can be acquired from the analysis of the NC program or from the data stored in the machining information storage 13, and the specific cutting force Kc [MPa] and the mechanical efficiency factor η can be acquired from the data stored in the machining information storage 13.

0069 The machining status analysis unit 14 calculates what percentage of the rated power of the first spindle motor the estimated load MP [kW] on the first spindle motor corresponds to, and adds up the machining times of the paths in which the calculated percentage exceeds a predetermined percentage (for example, 80%), thereby calculating the high-load machining time. For example, in the example shown in FIGS. 5 to 9, the paths $P_4$->$P_5$, Ps->Ps, and $P_{12}$->$P_{13}$ are the high-load machining paths. The machining status analysis unit 14 calculates the ratio of the high-load machining time to the first machining time, thereby calculating the high-load machining ratio (= the high-load machining time / the first machining time).

0070 The machining status analysis unit 14 inputs the calculated first machining time into the machining time estimation unit 6 via the machining time input unit 4 and inputs the calculated high-load machining ratio into the machining time estimation unit 6 via the high-load machining ratio input unit 5.

0071 With the machining time estimation device 10 according to this embodiment having the above-described configuration, data on the rated powers of the first and second spindle motors are first input through the touch panel 7 by the operator. Once the "RUN" key on the touch panel 7 is thereafter pressed and thereby the estimation start signal is input, the machining status analysis unit 14 analyzes the NC program and calculates the first machining time and the high-load machining ratio. The calculated first machining time is input into the machining time estimation unit 6 via the machining time input unit 4 and the calculated high-load machining ratio is input into the machining time estimation unit 6 via the high-load machining ratio input unit 5.

0072 After the data are input into the machining time estimation unit 6, the machining time estimation unit 6 estimates the second machining time based on the input data in the same manner as in the first embodiment. The estimated second machining time is displayed on the touch panel 7.

0073 Thus, the machining time estimation device 10 according to this embodiment is configured such that the first machining time and the high-load machining ratio are calculated by the machining status analysis unit 14. Therefore, the machining time estimation device 10 is able to acquire the first machining time and the high-load machining ratio without depending on manual work, for example, even in the case where the first NC machine tool does not include a monitoring system for monitoring the operating status of the first NC machine tool. In this sense, the machining time estimation device 10 realizes easy and quick estimation of the second machining time.

0074 Above have been described specific embodiments of the present invention. However, it should be noted that the present invention is not limited to the above-described embodiments and can be implemented in other manners.

0075 For example, in the second embodiment, the machining status analysis unit 14 calculates the first machining time and the high-load machining ratio by analyzing the NC program. However, the machining status analysis unit 14 is not limited to this configuration and may be configured to estimate the first machining time and the high-load machining ratio by a simulating method of virtually executing the NC program using at least the information on the workpiece, the information on the tool, and the machine information on the first NC machine tool.

0076 Further, in the second embodiment, the rated power of the first spindle motor is input through the touch panel 7 by the operator. However, the present invention is not limited thereto and a configuration is possible in which the data on the rated power of the first spindle motor stored in the machining information storage 13 is input into the machining time estimation unit 6 via the motor information input unit 3 from the machining status analysis unit 14.

0077 Further, in the second embodiment, the second computing device 11 may be composed of a computer different from the computing device 2.

0078 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims. Reference Signs List

0079

| | |
|---|---|
| 1 | Machining time estimation device |
| 2 | Computing device |
| 3 | Motor information input unit |
| 4 | Machining time input unit |
| 5 | High-load machining ratio input unit |
| 6 | Machining time estimation unit |
| 7 | Touch panel |
| 10 | Machining time estimation device |
| 11 | Second computing device |
| 12 | NC program storage |
| 13 | Machining information storage |
| 14 | Machining status analysis unit |

**Claims**

1. A machining time estimation method, comprising:

   acquiring a first machining time as a machining time for machining of a predetermined workpiece by a first NC machine tool using an NC program created for the machining of the workpiece and acquiring a high-load machining ratio as a ratio of a high-load machining time performed at a predetermined or more high loading with respect to a rated power of a first spindle motor mounted in the first NC machine tool in the first machining time; and

estimating a second machining time as a machining time for machining of the workpiece by a second NC machine tool using the NC program modified to a condition making a high loading with respect to a rated power of a second spindle motor mounted in the second NC machine tool equal to the high loading in the first NC machine tool, based on the acquired first machining time and high-load machining ratio, the rated power of the first spindle motor, and the rated power of the second spindle motor.

2. The machining time estimation method according to claim 1, **characterized in that** the second machining time $T_2$ is estimated using an equation:

$$T_2 = ((T_1-(T_1 \times R))+(T_1 \times R) \times (MP_1/MP_2),$$

where $T_1$ is the first machining time, R is the high-load machining ratio, $MP_1$ is the rated power of the first spindle motor, and $MP_2$ is the rated power of the second spindle motor.

3. A machining time estimation device, comprising:

a motor information input unit configured to input a rated power of a first spindle motor mounted in a first NC machine tool and a rated power of a second spindle motor mounted in a second NC machine tool;

a machining time input unit configured to input a first machining time as a machining time for machining of a predetermined workpiece by the first NC machine tool using an NC program created for the machining of the workpiece;

a high-load machining ratio input unit configured to input a high-load machining ratio as a ratio of a high-load machining time performed at a predetermined or more high loading with respect to the rated power of the first spindle motor in the first machining time; and

a machining time estimation unit configured to estimate a second machining time as a machining time for machining of the workpiece by the second NC machine tool using the NC program modified to a condition making a high loading with respect to the rated power of the second spindle motor equal to the high loading in the first NC machine tool, based on the rated powers of the first and second spindle motors input from the motor information input unit, the first machining time input from the machining time input unit, and the high-load machining ratio input from the high-load machining ratio input unit.

4. The machining time estimation device according to claim 3, **characterized in that**:

the machining time estimation device includes a touch panel having a function of inputting data and a function of displaying data;

the motor information input unit, the machining time input unit, and the high-load machining ratio input unit are each configured to input information via the touch panel; and

the machining time estimation unit is configured to display the estimated second machining time on the touch panel.

5. The machining time estimation device according to claim 3 or 4, **characterized in that**:

the machining time estimation device includes a machining status analysis unit configured to, using at least information on the workpiece, information on a tool, and machine information on the first NC machine tool, estimate the first machining time for the machining of the workpiece by the first NC machine tool executing the NC program created for the machining of the workpiece and estimate the high-load machining ratio;

the machining status analysis unit is configured to input the estimated first machining time into the machining time input unit and input the estimated high-load machining ratio into the high-load machining ratio input unit.

6. The machining time estimation device according to any one of claims 3 to 5, **characterized in that** the machining time estimation unit is configured to estimate the second machining time $T_2$ using an equation:

$$T_2 = ((T_1-(T_1 \times R))+(T_1 \times R) \times (MP_1/MP_2),$$

where $T_1$ is the first machining time, R is the high-load machining ratio, $MP_1$ is the rated power of the first spindle motor, and $MP_2$ is the rated power of the second spindle motor.

7. A computer program for causing a computer to function as:

a motor information input unit configured to input a rated power of a first spindle motor mounted in a first NC machine tool and a rated power of a second spindle motor mounted in a second NC machine tool;

a machining time input unit configured to input a first machining time as a machining time for machining of a predetermined workpiece by the first NC machine tool using an NC program created for the machining of the workpiece; a high-load machining ratio input unit configured to input a high-load machining ratio as a ratio of a high-load machining time performed at a predetermined or more high loading with respect to the rated power of the first spindle motor in the first machining time; a machining time estimation unit configured to estimate a second machining time as a machining time for machining of the workpiece by a second NC machine tool using the NC program modified to a condition making a high loading with respect to the rated power of the second spindle motor equal to the high loading in the first NC machine tool, based on the rated powers of the first and second spindle motors input from the motor information input unit, the first machining time input from the machining time input unit, and the high-load machining ratio input from the high-load machining ratio input unit; and a display unit configured to display the second machining time estimated by the machining time estimation unit.

8. The computer program according to claim 7, **characterized in that** the machining time estimation unit is configured to estimate the second machining time T2 using an equation:

$$T_2 = ((T_1 - (T_1 \times R)) + (T_1 \times R) \times (MP_1 / MP_2),$$

where $T_1$ is the first machining time, R is the high-load machining ratio, $MP_1$ is the rated power of the first spindle motor, and $MP_2$ is the rated power of the second spindle motor.

9. A computer-readable recording medium having the computer program according to claim 7 or 8 recorded thereon.

EP 4 364 888 A1

FIG.1

*FIG.2*

*FIG. 3*

FIG. 4

FIG. 5

*FIG.6*

*FIG.7*

FIG.8

FIG.9

## INTERNATIONAL SEARCH REPORT

| International application No. |
| --- |
| **PCT/JP2021/026274** |

**A.    CLASSIFICATION OF SUBJECT MATTER**

*B23Q 15/00*(2006.01)i
FI:   B23Q15/00 B

According to International Patent Classification (IPC) or to both national classification and IPC

**B.    FIELDS SEARCHED**

Minimum documentation searched (classification system followed by classification symbols)

B23Q15/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2002-287810 A (FURUKAWA TECHNO RESEARCH KK) 04 October 2002 (2002-10-04) entire text, all drawings | 1-9 |
| A | JP 2003-175439 A (MORI SEIKI SEISAKUSHO KK) 24 June 2003 (2003-06-24) entire text, all drawings | 1-9 |
| A | JP 2017-146859 A (FANUC LTD) 24 August 2017 (2017-08-24) entire text, all drawings | 1-9 |
| A | JP 2020-024676 A (SANDVIK MACHINING SOLUTIONS AB) 13 February 2020 (2020-02-13) entire text, all drawings | 1-9 |
| A | US 5663894 A (FORD GLOBAL TECHNOLOGIES, INC.) 02 September 1997 (1997-09-02) entire text, all drawings | 1-9 |

☐ Further documents are listed in the continuation of Box C.       ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **27 September 2021** | **12 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/026274**

| Patent document cited in search report | | | Publication date (day/month/year) | Patent family member(s) | | | Publication date (day/month/year) |
|---|---|---|---|---|---|---|---|
| JP | 2002-287810 | A | 04 October 2002 | (Family: none) | | | |
| JP | 2003-175439 | A | 24 June 2003 | US | 2003/0110006 | A1 | |
| | | | | entire text, all drawings | | | |
| | | | | EP | 1320001 | A2 | |
| JP | 2017-146859 | A | 24 August 2017 | US | 2017/0242408 | A1 | |
| | | | | entire text, all drawings | | | |
| | | | | DE | 102017102768 | A1 | |
| | | | | CN | 107092235 | A | |
| JP | 2020-024676 | A | 13 February 2020 | US | 2019/0384258 | A1 | |
| | | | | entire text, all drawings | | | |
| | | | | WO | 2019/238747 | A1 | |
| | | | | EP | 3582044 | A1 | |
| | | | | CN | 110610012 | A | |
| | | | | KR | 10-2019-0141611 | A | |
| US | 5663894 | A | 02 September 1997 | EP | 0762248 | A1 | |
| | | | | DE | 69617142 | T2 | |
| | | | | CA | 2184649 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003175439 A